# EUROPEAN PATENT APPLICATION

(11) **EP 4 502 895 A1**
(43) Date of publication of application: **05.02.2025**
(21) Application number: 24183064.5
(22) Date of filing: 19.06.2024
(51) Int. Cl.: G06Q 10/0639, G09B 9/08

(54) **UTILIZING BEHAVIORAL ELICITATION EVENTS FOR EVALUATING A TRAINING PERFORMANCE AGAINST A COMPETENCY FRAMEWORK**

(30) Priority: 02.08.2023 US 202318364380
(71) Applicant: The Boeing Company, Arlington, VA 22202 (US)
(72) Inventor: Boyer, Cristina M., Arlington, 22202 (US); Olson, Tess E., Arlington, 22202 (US)
(74) Representative: Witte, Weller & Partner Patentanwälte mbB

(57) **Abstract**

One example provides a method (800) of evaluating a training performance of a training subject (104) and performed in a training environment. The method (800) receives (802) a simulation state update (502, 504) from a computing system (100, 900, 402) of the training environment, and queries (804) a behavioral elicitation event (BEE) database to determine a set of active BEEs based upon the simulation state update (502, 504). The method (800) further receives (812) a plurality of simulation action notifications (506, 508) from the computing system (100, 900, 402), and for each simulation action notification (506, 508), determines (814) whether an action represented by the simulation action notification (506, 508) matches an elicited action (206, 308, 310) for an active BEE. The method (800) further stores (820) information regarding the elicited action (206, 308, 310) as a response to the active BEE. The method (800) determines (826) a set of completed BEEs comprising any active BEEs that have all corresponding elicited actions (206, 308, 310) met, and for each completed BEE, stores (828) information regarding the completed BEE.

## Description

### FIELD

The disclosed examples relate to automated evaluation of a training subject against a competency framework.

### BACKGROUND

Some industries evaluate professionals against a specified competency framework during professional training. The competency framework can comprise soft skills to be demonstrated by the training subject in addition to hard skills performed during a training performance in a training environment. Example soft skills include communication, leadership, teamwork, situation awareness, management of information, management of hard skill tasks, and knowledge of hard skill procedures. For example, training of commercial pilots uses a competency-based training and assessment (CBTA) to evaluate student pilots on core pilot competencies defined by the International Civil Aviation Organization (ICAO). The ICAO currently evaluates trainee pilots based upon nine pilot competencies: application of knowledge, application of procedures and compliance with regulations, communication, airplane flight path management for automation, airplane flight path management for manual control, leadership and teamwork, problem solving and decision making, situation awareness and management of information, and workload management. Current methods of evaluating soft skills are performed by observation of an instructor during the training performance. Such evaluation by observation can be difficult to objectively assess and/or provide feedback to the training subject for the instructor.

### SUMMARY

One disclosed example provides a method of evaluating a training performance of a training subject against a competency framework. The training performance is performed in a training environment that simulates a physical environment. The method comprises receiving a simulation state update from a computing system of the training environment, and querying a behavioral elicitation event (BEE) database to determine, from a plurality of BEEs stored in the BEE database, a set of active BEEs based upon the simulation state update. Each BEE of the plurality of BEEs comprises one or more elicited actions and one or more observable behaviors. The method further comprises receiving a plurality of simulation action notifications from the computing system of the training environment. The method further comprises for each simulation action notification, determining whether an action represented by the simulation action notification matches an elicited action for at least one active BEE in the set of active BEEs and storing information regarding the elicited action as a response to the at least one active BEE in the set of active BEEs. The method further comprises determining a set of completed BEEs. The set of completed BEEs comprising each active BEE that has all corresponding elicited actions met. The method further comprises, for each completed BEE of the set of completed BEEs, storing information regarding the training performance. The information comprises the one or more observable behaviors of the completed BEE.

Another example provides a computing system comprising a logic system operably coupled to a training environment that simulates a physical environment, and a computer-readable storage system. The computer-readable storage system comprises a behavioral elicitation event (BEE) database comprising a plurality of BEEs, each BEE of the plurality of BEEs comprising one or more elicited actions and one or more observable behaviors, and instructions executable by the logic system. The instructions are executable to receive a simulation state update from a computing system of the training environment, query the BEE database to determine, from the plurality of BEEs, a set of active BEEs based upon the simulation state update, and receive a plurality of simulation action notifications. The instructions are further executable to, for each simulation action notification, determine whether an action represented by the simulation action notification matches an elicited action for at least one active BEE in the set of active BEEs, and store information regarding the elicited action as a response to the at least one active BEE in the set of active BEEs. The instructions are further executable to determine a set of completed BEEs. The set of completed BEEs comprises each active BEE that has all corresponding elicited actions met. The instructions are further executable to, for each completed BEE of the set of completed BEEs, store information regarding the completed BEE.

Another example provides a method of evaluating a training performance of a training subject against a competency framework. The training performance being performed in a training environment that simulates a physical environment. The method comprising receiving a first simulation state update from a computing system of the training environment, and querying a behavioral elicitation event (BEE) database to determine, from a plurality of BEEs stored in the BEE database, a first set of active BEEs based upon the first simulation state update. Each BEE of the plurality of BEEs comprises one or more elicited actions and one or more observable behaviors. The method further comprises receiving a plurality of simulation action notifications from the computing system of the training environment. The method further comprises, for each simulation action notification, determining whether an action represented by the simulation action notification matches an elicited action for at least one active BEE in the first set of active BEEs, and storing information regarding the elicited action and corresponding observable behaviors as a response to the at least one active BEE in the first set of active BEEs. The method further comprises receiving a second simulation update from the computing system of the training environment, querying the BEE database to determine a second set of active BEEs based upon the second simulation state update, and comparing the first set of active BEEs to the second set of active BEEs. The method further comprises, for each active BEE in the first set of active BEEs and not in the second set of active BEEs, store the active BEE as an incomplete BEE and also store information regarding the incomplete BEE.

### BRIEF DESCRIPTION OF THE DRAWINGS

FIG. 1 shows a block diagram of an example computing system configured to utilize a BEE database to evaluate a training performance.
FIG. 2 shows a block diagram of an example BEE database used by the computing system of FIG. 1.
FIG. 3 illustrates a block diagram of an example engine anti-ice BEE.
FIGS. 4A and 4B schematically illustrate an example algorithm that uses the BEE database of FIG. 1 to evaluate a training performance of a test subject.
FIG. 5 illustrates a table of example simulation updates corresponding to a successful completion of the engine anti-ice BEE of FIG. 3
FIGS. 6 and 7 schematically illustrate example subprocesses of the algorithms of FIGS. 4A and 4B.
FIG. 8 illustrates a flowchart illustrating an example method for evaluating a training performance of a training subject against a competency framework.
FIG. 9 shows a block diagram of an example computing system.

### DETAILED DESCRIPTION

As previously mentioned, training of a pilot uses the competency-based training and assessment (CBTA) to evaluate a training subject (the pilot) against the ICAO competency framework. Current methods of using the CBTA in training solutions have an instructor evaluate the training subject on the ICAO competency framework by observing the training subject during a training performance, such as during training in a flight simulator. Further, the instructor must also provide supporting evidence showing how the training subject either successfully or unsuccessfully demonstrated observable behaviors corresponding with each competency in the ICAO competency framework. Such current methods of evaluation pose several problems. First, the ICAO competency framework comprises mostly soft skills. Soft skills are difficult for the instructor to objectively assess and provide feedback to the training subject upon successful completion of the ICAO competency framework. For example, evaluation by observation can be difficult to provide information with traceability between actions performed by the training subject and the ICAO competency framework. The lack of traceability can make it difficult to provide recommendations to help the training subject improve their training performance in a next training performance over a current training performance. Another problem with evaluation by observation is that a similar training performance can receive differing evaluations across different instructors. Additionally, the instructor needs to be present during the training performance for the observation. This can add cost to the pilot training to cover instructor pay and training.

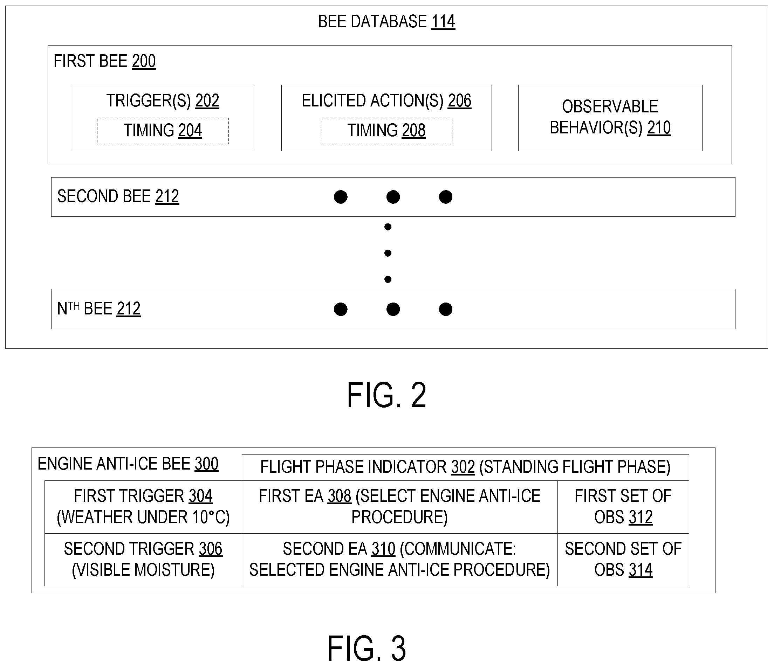

Accordingly, examples are disclosed that relate to utilizing computer-implemented behavioral elicitation events (BEEs) to automate the evaluation of a training performance of a training subject against a competency framework. A BEE is an event that elicits particular behaviors out of the training subject to demonstrate specified soft skill competencies in the competency framework. The training performance is performed by the training subject in a training environment that simulates a physical environment. Example training environments are a fixed training device (FTD) flight simulator, a full motion simulator (FMS) flight simulator, and a virtual training environment. As described in more detail below, the disclosed examples utilize a BEE database comprising a plurality of BEEs to evaluate the training performance. Each BEE of the plurality of BEEs comprises one or more triggers, one or more elicited actions, and one or more observable behaviors, as discussed in more detail with reference to FIG. 2. The disclosed examples receive simulation state updates from the training environment, and determine a set of active BEEs based on the simulation state update by querying the BEE database. The simulation state update indicates a change in a simulation state of the training environment.

Continuing, the disclosed examples receive a plurality of simulation action notifications from the training environment. The simulation action notifications indicate a corresponding plurality of user inputs received by the training environment. When an action represented by the simulation action notification matches an elicited action for an active BEE in the set of active BEEs, the disclosed examples store information regarding the elicited action and corresponding observable behaviors as a response to the active BEE. Further, when an active BEE has all corresponding elicited actions met, the disclosed examples determine that the active BEE is a completed BEE.

The disclosed examples further store information regarding any completed BEEs and/or incomplete BEEs. The information can be used as evidence supporting how the training subject demonstrated various competencies in the competency framework during the training performance. The information can also be used for instructional purposes as well as tailoring training scenarios for an individual training subject. Using the BEE database can provide scenario independent behavior detection for evaluation, which can help reduce author time of a training scenario over current methods where each scenario is authored independently of each other.

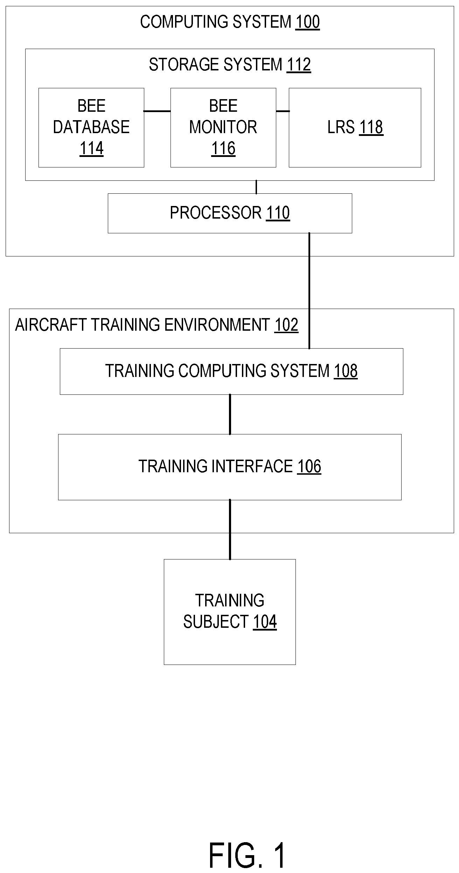

FIG. 1 depicts a block diagram of an example computing system 100 in communication with a training environment, which in this example takes the form of an aircraft training environment 102. Here, aircraft training environment 102 is configured to simulate an aircraft environment for use in training pilots. In some examples, aircraft training environment 102 can be configured as a FTD, a FMS, or a virtual training environment. A training subject 104 performs a training performance in aircraft training environment 102 using a training interface 106 to interact with a training computing system 108. Training computing system 108 is configured to perform a computer simulated training scenario. In some examples, training interface 106 and aircraft training environment 102 can be configured to simulate a flight deck within aircraft training environment 102 and to receive user inputs from training subject 104. Examples user inputs include audio input, button presses or hardware selections into training interface 106, video input, and other suitable inputs from training subject 104.

In some examples, training computing system 108 can further be configured to utilize machine learning algorithms to analyze the various user inputs, such as using speech to text recognition to determine content of audio input or a classifier to identify specified gestures in the video input, for example. Further, the machine learning algorithms can be used with physiological measurements to help determine whether training subject 104 is paying attention to a desired portion of the flight deck in aircraft training environment 102. Such a configuration can help to generate a perception model that can be used to detect elicited actions corresponding to various monitoring competencies in the competency framework, such as a cognitive workload management competency, for example. Training subject 104 further can enter user inputs in response to the computer simulated training scenario, such as a change in one or more of a simulated flight phase, simulated weather, or a state of a simulated aircraft, for example. In other examples, aircraft training environment 102 can have another configuration. In yet further examples, another training environment other than an aircraft training environment can be used.

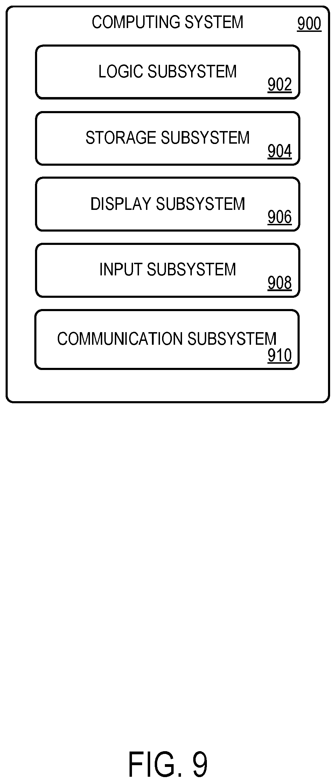

Computing system 100 is configured to evaluate the training performance of training subject 104 against a competency framework, such as the ICAO pilot competencies, for example. Computing system 100 comprises a processor 110 operably coupled to aircraft training environment 102, and a storage system 112. Storage system 112 comprises a BEE database 114 comprising a plurality of BEEs as discussed with reference to FIG. 2. Storage system 112 further comprises a BEE monitor 116 configured to be executable by processor 110. Storage system 112 further comprises a learning record store (LRS) 118 configured to store information relating to the evaluation of the performance of training subject 104. In some examples, LRS 118 can be configured to also store information from aircraft training environment 102. In other examples, the information from a training environment and/or information relating to the performance evaluation can be stored in another location or across multiple locations. Further aspects of processor 110 and storage system 112 are discussed with reference to FIG. 9. In other examples, computing system 100 can be configured to receive flight operations quality assurance (FOQA) data recorded during a live flight and to detect pilot behavior against the ICAO competency framework. Such a configuration can help to determine training recommendations for an airline fleet and/or to determine effectiveness of training programs of the airline fleet. While discussed herein with reference to aircraft training environment 102, a BEE database can be used to evaluate another training performance against any suitable competency framework in other examples.

Each BEE stored in a BEE database indicates an event that elicits particular behaviors out of a training subject. FIG. 2 shows a block diagram of BEE database 114 in more detail. BEE database 114 comprises a first BEE 200. First BEE 200 comprises one or more triggers 202 defining conditions when first BEE 200 is an active BEE. More specifically, each trigger can be an active trigger when a corresponding condition meets a simulation state of a training environment. In examples of pilot training, a trigger can comprise a condition of specified simulated air temperatures, specified flight phases of a simulated aircraft, and specified fuel levels, altitude, speed, and/or another status of the simulated aircraft. Further, examples of flight phases include standing, cruising, takeoff, landing, taxing, ascending, descending, and approach. Trigger 202 can comprise an optional timing condition 204 indicating a specified time to respond to trigger 202. Timing condition 204 can also indicate whether training subject 104 is expected to respond before or wait to respond until after the specified time. As a specific example, a fuel-leak BEE has a trigger with a timing condition of wait until a desired time before taking an action to an increase in fuel flow. First BEE 200 further comprises one or more elicited actions 206 defining expected user inputs as a response to when first BEE 200 is an active BEE. Similar to triggers 202, an elicited action 206 can comprise a timing condition 208. In some examples, trigger 202 and/or elicited action 206 can comprise logic statements (not shown for clarity), such as Boolean logic (e.g., AND, OR, etc.), sequence statements, and conditional statements, for example. First BEE 200 further comprises one or more observable behaviors 210 indicating competencies demonstrated by training subject 104 by performing one or more elicited actions 206. Further, each observable behavior 210 can line-up to a specified competency in a competency framework, such as specified pilot competencies in the ICAO competencies. A specific example of a BEE is provided in FIG. 3.

Similarly, BEE database 114 comprises a second BEE 212 having one or more triggers, one or more elicited actions, and one or more observable behaviors. In such a manner, a BEE database can help to align elicited actions with observable behaviors for any suitable competency framework such that the BEE database can help to detect evidence of the observable behaviors in another simulated training environment. While FIG. 2 depicts two BEEs for clarity, BEE database 114 can comprise any suitable number of BEEs in other examples, such as a single BEE or more than two BEEs. BEE database 114 is illustrative. In other examples, BEE database 114 can comprise another configuration.

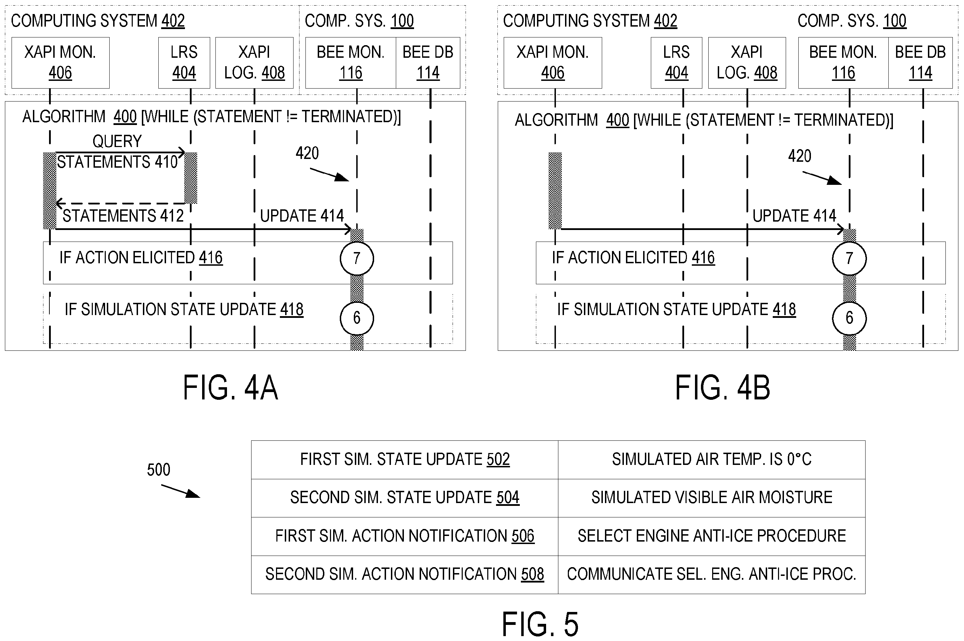

FIG. 3 depicts a block diagram of an example engine anti-ice BEE 300. Engine anti-ice BEE 300 can be used to evaluate a training performance of a pilot in a training environment as discussed with reference in FIGS. 4A and 4B. In the example of FIG. 3, engine anti-ice BEE 300 corresponds to an engine anti-ice scenario during a simulated standing flight phase in aircraft training environment 102. As such, engine anti-ice BEE 300 comprises a flight phase indicator 302 of standing flight phase which indicates that engine anti-ice BEE 300 can be active during the simulated standing flight phase. Engine anti-ice BEE 300 further comprises a first trigger 304 configured to be an active trigger when a simulated air temperature of the training environment is under 10°C. Similarly, a second trigger 306 is configured to be an active trigger when the training environment has simulated visible air moisture.

Engine anti-ice BEE 300 further comprises a first elicited action (EA) 308 and a second elicited action 310. Here, first elicited action 308 defines a user input to aircraft training environment 102 indicating that the pilot selected an engine anti-ice procedure in an electronic flag bag of aircraft training environment 102. Second elicited action 310 defines a user input indicating that the pilot verbally communicated to their co-pilot that the engine anti-ice procedure was selected.

Engine anti-ice BEE 300 further comprises a first set of observable behaviors (OBs) 312 that define competencies related to demonstrated behaviors of the pilot performing first elicited action 308. Here, first set of observable behaviors 312 indicates that a training subject demonstrated knowledge of procedures, knowing where to source required information, situational awareness, communication, problem solving, following standard operating procedures, and planning, prioritizing, and scheduling appropriate tasks. Similarly, engine anti-ice BEE 300 also comprises a second set of observable behaviors 314 related to the response to second elicited action 310. Second set of observable behaviors 314 indicates that the training subject demonstrated conveying messages clearly, accurately, and concisely. First and second sets of observable behaviors 312, 314 correspond to pilot competencies defined in the ICAO competencies. FIG. 3 is illustrative. In other examples, engine anti-ice BEE 300 can have another configuration.

One or more computing systems can be configured to perform an algorithm that uses a BEE database to evaluate a training performance of a training subject in a training environment, such as aircraft training environment 102, for example. FIGS. 4A and 4B illustrate overview flowcharts of an example algorithm 400 that uses BEE database 114. Here, a computing system 402 and computing system 100 perform algorithm 400. In some examples, computing system 402 can be a part of training computing system 108. Computing system 402 comprises a learning record store (LRS) 404 configured to store information regarding user inputs from the training subject, such as interactions with another individual participating in the training environment, and information regarding actions performed by the training subject, for example. LRS 404 is further configured to store information about a simulated state of the training environment, such as simulated weather, for example. Computing system 402 further comprises an experience application programming interface (xAPI) monitor 406 and an xAPI logger 408. Briefly, xAPI monitor 406 is configured to monitor LRS 404 for any new statements received from the training environment. xAPI logger 408 is configured to transmit information from BEE monitor 116 to LRS 404 to be stored. In other examples, another configuration of one or more computing systems comprising a BEE database can perform algorithm 400.

With reference to FIG. 4A, xAPI monitor 406 queries, at 410, a session in LRS 404 for an update statement comprising a simulation state update or simulation action notification. In response, LRS 404 returns, at 412, the update statement to xAPI monitor 406. At 414, xAPI monitor 406 sends the update statement to BEE monitor 116. Alternatively, in the example of FIG. 4B, the querying, at 410, for update statements and the returning, at 412, of the update statements are omitted.

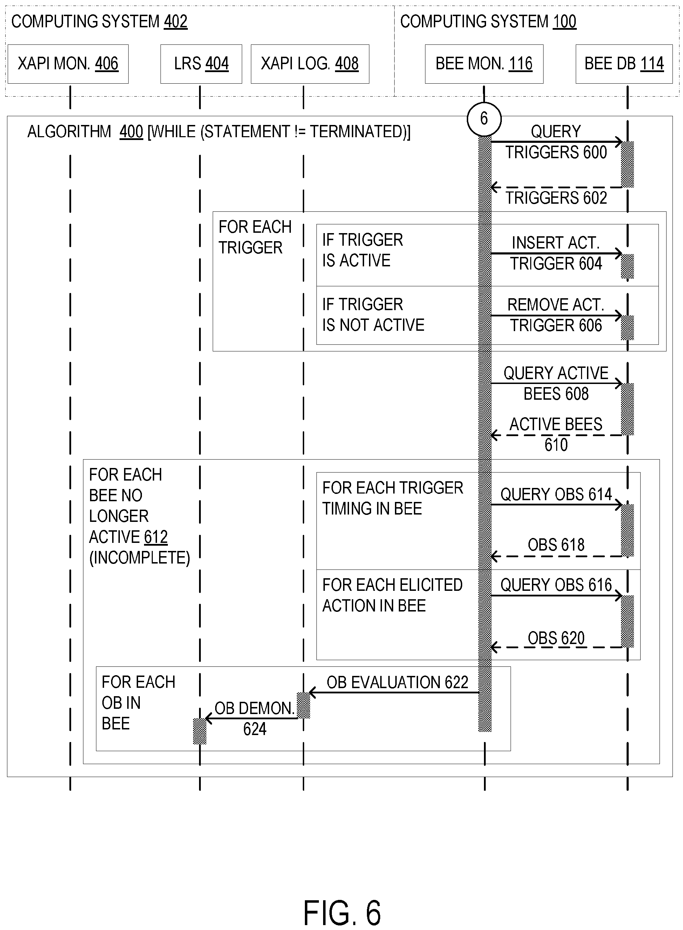

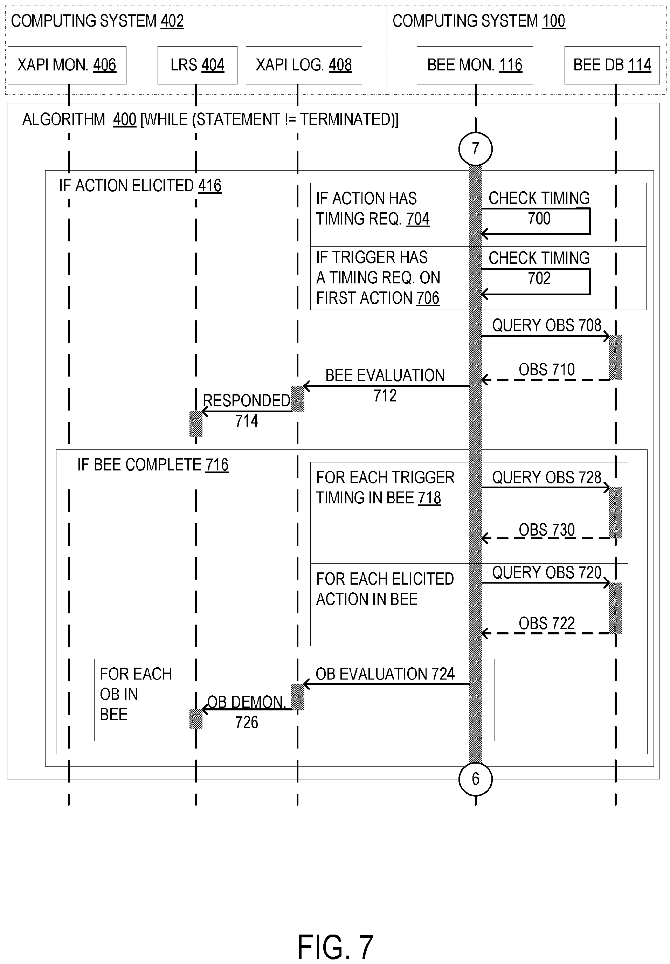

After BEE monitor 116 receives the update statement and when the update statement comprises a simulation action notification, as indicated at 416, algorithm 400 moves to corresponding subprocesses as discussed with reference to FIG. 7. Alternatively, when the statement update comprises a simulation state update, as indicated at 418, algorithm 400 moves to corresponding subprocesses discussed with reference to FIG. 6. The examples of FIG. 4A or FIG. 4B can be selected based on a configuration of the training environment. For example, the example of FIG. 4A can be selected for use with a FTD or FMS. The example of FIG. 4B can be selected for use with a virtual training environment. FIGS. 4A and 4B are illustrative. In other examples, algorithm 400 can use another overview flowchart.

For illustration, subprocesses of algorithm 400 are discussed with reference to engine anti-ice BEE 300. As such, FIG. 5 depicts a table of example update statements 500 corresponding to a successful performance of training subject 104 in response to engine anti-ice BEE 300. Here, a first simulation state update 502 comprises a change in simulated weather reflecting that the simulated air temperature is 0°C. Further, a second simulation state update 504 comprises a change in the simulated weather reflecting that there is simulated visible air moisture. Next, a first simulation action notification 506 indicates a corresponding user input of selecting an engine anti-ice procedure in an electronic flight bag of aircraft training environment 102. Further, a second simulation action notification 508 indicates a corresponding user input of communicating that the engine anti-ice procedure was selected. Such a user input can comprise audio input, for example. In other examples, algorithm 400 can use another BEE and/or other update statements.

As previously mentioned, algorithm 400 is discussed using the example of engine anti-ice BEE 300 during a simulated standing flight phase. In the current example, algorithm 400 will perform more than one loop through various subprocesses. During each loop, algorithm 400 performs different subprocesses and/or skips different subprocesses. A first loop begins when xAPI monitor 406 sends, at 414, first simulation state update 502 to BEE monitor 116, and algorithm 400 moves to FIG. 6 as discussed above. With reference to FIG. 6, BEE monitor 116 queries, at 600, BEE database 114 for any triggers related to first simulation state update 502 (sim. air temp. is 0°C). In response, BEE database 114, returns, at 602, first trigger 304 (air temp. under 10°C) of engine anti-ice BEE 300. Here, first trigger 304 is an active trigger. Therefore, BEE monitor 116 stores, at 604, first trigger 304 in a set of active triggers. In this example, no active triggers have become inactive triggers based on first simulation state update 502, so BEE monitor 116 skips 606. In other examples, BEE monitor 116 can remove, at 606, any inactive triggers from the set of active triggers. An inactive trigger is a trigger having a condition that is not met by a current state of the training environment. As a specific example, a change in a simulated flight phase can cause one or more triggers to become inactive. In such a manner, the set of active triggers can help to enable a quick query for any active BEEs.

Continuing, BEE monitor 116 queries, at 608, BEE database 114 for any active BEEs based on the set of active triggers. As previously mentioned, an active BEE has all corresponding triggers as active triggers. Here, engine anti-ice BEE 300 has one active trigger (first trigger 304) and one inactive trigger (second trigger 306). As a result, BEE database 114 sends, at 610, in response to the query, no active BEEs to BEE monitor 116. Further, as no BEEs are in a prior set of active BEEs and not in the set of active triggers resulting from first trigger 304 being in the set of active triggers, BEE monitor 116 skips 612 and returns to 420.

In other examples when a BEE is in the prior set of active BEEs and not in the set of active BEEs, BEE monitor 116 determines, at 612, a set of incomplete BEEs comprising one or more BEEs that are in the prior set of active BEEs and not in the set of active BEEs. For each incomplete BEE in the set of incomplete BEEs, algorithm 400 can store information regarding the incomplete BEE. Specifically, BEE monitor 116 queries BEE database 114 for observable behaviors of the incomplete BEE for each corresponding trigger having an optional timing condition at 614, and/or for each corresponding elicited action at 616. In response, BEE database 114 returns the corresponding observable behaviors of the incomplete BEE at 618 and at 620, respectively. Next, BEE monitor 116 sends, at 622, an observable behavior evaluation for each incomplete BEE based on the corresponding observable behaviors of the incomplete BEE to xAPI logger 408. The observable behavior evaluation can indicate that a subset of the corresponding observable behaviors was demonstrated and/or partially demonstrated in response to the incomplete BEE. As a specific example, the evaluation can indicate that two elicited actions were completed, but there was an opportunity to complete five elicited actions. Continuing at 624, xAPI logger 408 then sends information regarding the observable behaviors demonstrated, partially demonstrated, and/or failed to be demonstrated to be stored to LRS 404. In such a manner, LRS 404 can store information regarding completed elicited actions, and also information regarding missed elicited actions in response to an incomplete BEE.

Returning to the example of engine anti-ice BEE 300, algorithm 400 continues to a second loop when xAPI monitor 406 sends, at 414, second simulation state update 504 (visible moisture in the air). BEE monitor 116 skips 416 and moves to the subprocess related to a simulation state update at 418. In FIG. 6, BEE monitor 116 again queries, at 600, BEE database 114 for any triggers related to second simulation state update 504. Here, BEE monitor 116, receives, at 602, second trigger 306 (simulated visible air moisture) and stores, at 604, second trigger 306 in the set of active triggers. BEE monitor 116 further queries, at 608, BEE database 114 for any active BEEs based on the set of active triggers. Here, first trigger 304 (weather is under 10°C) and second trigger 306 (visible air moisture) of engine anti-ice BEE 300 are active. Thus, BEE database 114 stores engine anti-ice BEE 300 in a set of active BEEs. Similar to the first loop, no BEEs have become incomplete BEEs as a result of second simulation state update 504 and as such, algorithm 400 returns to 420.

In the next, a third loop of algorithm 400, xAPI monitor 406 sends, at 414, first simulation action notification 506 (the user input of selecting the engine anti-ice procedure). Here, an action represented by first simulation action notification 506 matches first elicited action 308 of engine anti-ice BEE 300, and as such, algorithm 400 moves to 7 at 416. Now with reference to FIG. 7, first elicited action 308 does not have a corresponding timing condition. Similarly, no triggers of engine anti-ice BEE 300 has an optional timing condition. Thus, algorithm 400 skips 700 and 702.

In other examples, an elicited action, as indicated at 704, and/or a corresponding trigger, as indicated at 706, can have an optional timing condition. In such examples, BEE monitor 116 checks, at 700, whether a timing of the simulation action notification is within the timing condition of the elicited action. As a specific example, a fuel-leak BEE has a fuel-flow trigger of an increased fuel flow indication with a timing condition. Further, the timing condition indicates that a specified time duration elapses before performing a corresponding elicited action in response to the fuel-flow trigger. BEE monitor 116 further checks, at 702, whether a timing of a trigger corresponding to the elicited action. Information regarding the timing of the simulation action notification and/or the timing of the trigger can be included in a BEE evaluation message to be stored.

Returning to the example of engine anti-ice BEE 300, BEE monitor 116 queries, at 708, BEE database 114 for one or more observable behaviors (OBs) corresponding to first elicited action 308. BEE monitor 116 receives, at 710, first set of observable behaviors 312. Further, BEE monitor 116 stores information regarding first elicited action 308 as a response to engine anti-ice BEE 300 by sending, at 712, a BEE evaluation to xAPI logger 408, and in response, xAPI logger 408 sends, at 714, a responded message to be stored to LRS 404. The information can comprise first set of observable behaviors 312 as behaviors demonstrated by the training subject performing first elicited action 308, for example. In other examples, other information regarding an elicited action as a response to an active BEE can be stored in another suitable manner.

Continuing the current example, engine anti-ice BEE 300 has first elicited action 308 met and second elicited action 310 not met. Therefore, at least one corresponding elicited action of engine anti-ice BEE 300 is not met, and therefore engine anti-ice BEE 300 is still an active BEE. Thus, algorithm 400 skips 716 and moves to querying, at 600, for active triggers in FIG. 6. In this example, first simulation action notification 506 (user input of selecting engine anti-ice procedure) does not match a condition for another trigger, and thus BEE database 114 does not return any new active triggers. Further, no new BEEs become active BEEs, and as such algorithm 400 returns to 420.

Similarly, algorithm 400 starts a fourth loop when BEE monitor 116 receives, at 414, second simulation action notification 508 and moves to 416. In FIG. 7, BEE monitor 116 queries, at 708, for observable behaviors (OBs) corresponding to second elicited action 310, and receives, at 710, second set of observable behaviors 314. Further, BEE monitor 116 stores information regarding second elicited action 310 as a response to engine anti-ice BEE 300 using xAPI logger 408 as described above with reference to first elicited action 308.

Here in the current example, engine anti-ice BEE 300 has all corresponding elicited actions met (e.g., both first and second elicited actions 308, 310). Thus, BEE monitor 116 determines, at 716, that engine anti-ice BEE 300 is a completed BEE. As previously discussed, engine anti-ice BEE 300 has no triggers having a timing condition, and therefore BEE monitor 116 skips 718. Next, BEE monitor 116 queries, at 720, for observable behaviors that are demonstrated by simply performing each corresponding elicited action of a completed BEE. In the current example of engine anti-ice BEE 300, BEE database 114 returns, at 722, first set of observable behaviors 312 for first elicited action 308, and second set of observable behaviors 314 for second elicited action 310. In response, BEE monitor 116 sends, at 724, an observable behavior evaluation message to xAPI logger 408 for each observable behavior in first and second sets of observable behaviors 312, 314. At 726, xAPI logger 408 sends an observable behavior demonstrated message to be stored to LRS 404. In such a manner, the observable behaviors demonstrated by the pilot in context of engine anti-ice BEE 300 are stored. In other examples, a BEE can have a trigger with a timing condition, as indicated at 718. In such examples, BEE monitor 116 queries, at 728, for observable behaviors that are demonstrated because of a timing of a corresponding elicited action relative to a timing of the trigger of the BEE. At 730, BEE monitor 116 receives the observable actions and further includes information regarding the timings in the observable behavior evaluation sent at 724.

Similar to the third loop, algorithm 400 next moves to query triggers at 600 in FIG. 6. As no new triggers have become active resulting from the training subject performing second elicited action 310 or the completion of engine anti-ice BEE 300, algorithm 400 skips through and returns to 420 and waits for a new simulation update. In such a manner, algorithm 400 utilizing BEE database 114 can evaluate the training performance of the pilot against the ICAO competencies. FIGS. 6 and 7 are illustrative. While algorithm 400 and corresponding subprocesses are discussed with reference to evaluating the pilot against engine anti-ice BEE 300, algorithm 400 can be used to evaluate a training performance of another training subject against another competency framework in other examples. Similarly in further examples, another algorithm utilizing BEE database 114 can be used to evaluate any training subject against any suitable competency framework performed in any suitable training environment that simulates a physical environment.

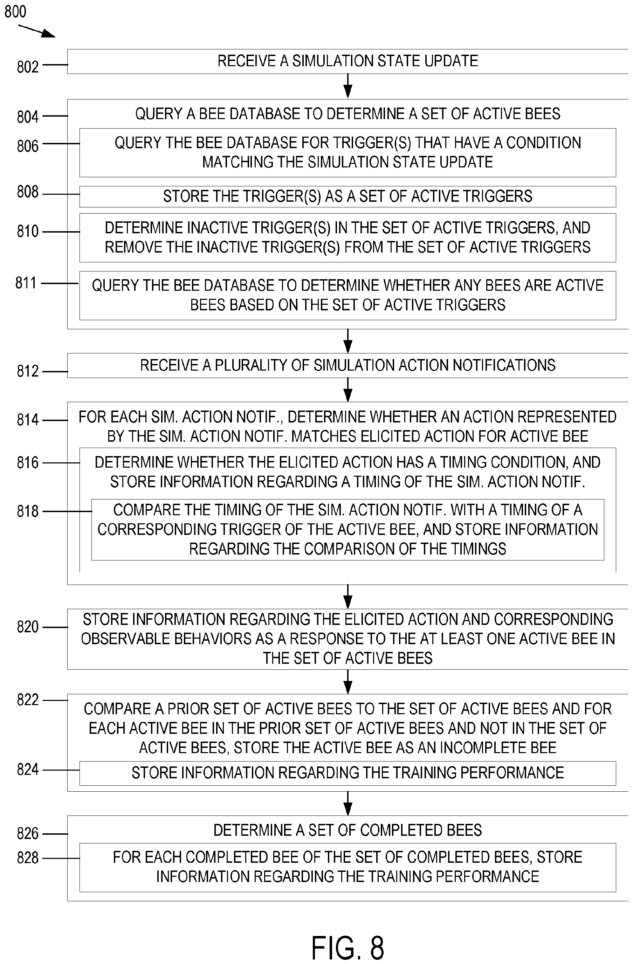

FIG. 8 illustrates a flowchart of an example method 800 for evaluating a training performance of a training subject against a competency framework. The training performance is performed in a training environment that simulates a physical environment, such as aircraft training environment 102, for example. In such an example the competency framework can comprise the ICAO competency framework, for example. In other examples, another training environment and/or another competency framework can be used. Method 800 can be performed by any suitable computing system comprising a BEE database, such as computing system 100, for example.

Method 800 comprises, at 802, receiving a simulation state update from a computing system of the training environment, such as training computing system 108, for example. In examples simulating an aircraft environment, the simulation state update can comprise a change in one or more of a simulated flight phase, simulated weather, or a state of a simulated aircraft. In other examples, the simulation state update can comprise another change in a simulation state the physical environment (e.g., simulated weather, simulated location, simulated alarms, etc.).

Returning, method 800 comprises, at 804, querying a BEE database to determine, from a plurality of BEEs stored in the BEE database, a set of active BEEs based upon the simulation state update. BEE database 114 can be used, for example. As discussed above, each BEE of the plurality of BEEs comprises one or more triggers, one or more elicited actions, and one or more observable behaviors. Querying the BEE database to determine the set of active BEEs comprises querying the BEE database for one or more triggers that have a condition matching the simulation state update, at 806. Determining the set of active BEEs also comprises storing the one or more triggers as a set of active triggers, at 808. Further, determining the set of active BEEs comprises, at 810, determining one or more inactive triggers in the set of active triggers by comparing a corresponding condition for each active trigger in the set of active triggers to the simulation state update, and removing the one or more inactive triggers from the set of active triggers. Determining the set of active BEEs further comprises, at 811, querying the BEE database to determine whether any BEEs are active BEEs based on the set of active triggers. In other examples, the set of active BEEs can be determined in another suitable manner.

Method 800 further comprises, at 812, receiving a plurality of simulation action notifications from the computing system of the training environment. The plurality of simulation action notifications indicates a corresponding plurality of user inputs received by the training environment. Examples of user inputs include detected speech, a selected input on a user interface of the training environment, detected eye movement, and/or detected gestures. In other examples, method 800 can again query the BEE database to determine a set of active BEEs as discussed with reference to 804. Method 800 further comprises, at 814, for each simulation action notification, determining whether an action represented by the simulation action notification matches an elicited action for at least one active BEE in the set of active BEEs. Method 800 comprises, when the action represented by the simulation action notification matches the elicited action, determining whether the elicited action has a timing condition, and storing information regarding a timing of the simulation action notification at 816. The timing condition can indicate that a desired timing of the simulation action notification is after or at a desired time duration. Alternatively, the timing condition can indicate that a desired timing of the simulation action notification is within a desired time duration. Method 800 further comprises, at 818, comparing the timing of the simulation action notification with a timing of a corresponding trigger of the at least one active BEE, and storing information regarding the comparison of the timings. In other examples, method 800 can omit 816 and/or 818.

Method 800 comprises, at 820, storing information regarding the elicited action and corresponding observable behaviors as a response to the at least one active BEE in the set of active BEEs. Method 800 further comprises, at 822, comparing a prior set of active BEEs to the set of active BEEs and for each active BEE in the prior set of active BEEs and not in the set of active BEEs, storing the active BEE as an incomplete BEE. Method 800 comprises, at 824, storing information regarding the training performance. The information comprises one or more missed elicited actions in response to the incomplete BEE. In other examples, 822 and 824 may be omitted.

Method 800 comprises, at 826, determining a set of completed BEEs. The set of completed BEEs comprises each active BEE that has all corresponding elicited actions met. At 828, method 800 further comprises, for each completed BEE of the set of completed BEEs, storing information regarding the training performance. The information comprises the one or more observable behaviors of the completed BEE. In some examples, the information can further comprise any suitable information regarding the completed BEE, such as timing information, for example.

Using a BEE database for an evaluation of a training performance as described herein can provide various benefits. The evaluation can provide data on the training performance to help an instructor objectively assess soft skill competencies and increase consistency of inter-rater reliability over evaluations by observation of the instructor. The evaluation can also help to provide detailed evidence for use when asserting the proficiency of a training subject performing the training performance. Further, the evaluation can help to provide traceability between elicited actions and specified competencies in a competency framework. Such traceability can help to provide feedback to the training subject regarding recommendations to raise a competency level during a next training performance over a current training performance. Additionally, the evaluation can help to enable tailoring a follow-on training scenario for the training subject based on the current training performance and/or prior training performances.

Additionally or alternatively, using the BEE database for evaluations across a plurality of training performances can provide data to enable analytics across training subjects to determine recommendations for updating a training scenario used in a training environment. Further, the data can also help to evaluate effectiveness of training environments, specifically virtual training environments. Similarly, such evaluations can help to analyze operational data to determine effectiveness of training scenarios and/or to determine recommended training scenarios across training subjects.

In some examples the methods and processes described herein can be tied to a computing system of one or more computing devices. In particular, such methods and processes can be implemented in hardware as described above, as a computer-application program or service, an application-programming interface (API), a library, and/or other computer-program product.

FIG. 9 schematically shows a simplified representation of a computing system 900 configured to provide any to all of the compute functionality described herein. Computing system 900 can take the form of one or more personal computers, server computers, and computers integrated with aircraft, as examples. Computing system 100, training computing system 108, and computing system 402 are examples of computing system 900.

Computing system 900 includes a logic subsystem 902 and a storage subsystem 904. Computing system 900 can optionally include a display subsystem 906, input subsystem 908, communication subsystem 910, and/or other subsystems not shown in FIG. 9.

Logic subsystem 902 includes one or more physical devices configured to execute instructions. For example, the logic subsystem can be configured to execute instructions that are part of one or more applications, services, programs, routines, libraries, objects, components, data structures, or other logical constructs. Such instructions can be implemented to perform a task, implement a data type, transform the state of one or more components, achieve a technical effect, or otherwise arrive at a desired result.

The logic subsystem can include one or more hardware processors configured to execute software instructions. Additionally, or alternatively, the logic subsystem can include one or more hardware or firmware devices configured to execute hardware or firmware instructions. Processors of the logic subsystem can be single-core or multi-core, and the instructions executed thereon can be configured for sequential, parallel, and/or distributed processing. Individual components of the logic subsystem optionally can be distributed among two or more separate devices, which can be remotely located and/or configured for coordinated processing. Aspects of the logic subsystem can be virtualized and executed by remotely accessible, networked computing devices configured in a cloud-computing configuration.

Storage subsystem 904 includes one or more physical devices configured to temporarily and/or permanently hold computer information such as data and instructions executable by the logic subsystem. When the storage subsystem includes two or more devices, the devices can be collocated and/or remotely located. Storage subsystem 904 can include volatile, nonvolatile, dynamic, static, read/write, read-only, random-access, sequential-access, location-addressable, file-addressable, and/or content-addressable devices. Storage subsystem 904 can include removable and/or built-in devices. When the logic subsystem executes instructions, the state of storage subsystem 904 can be transformed - e.g., to hold different data.

Storage subsystem 904 can include removable and/or built-in devices. Storage subsystem 904 can include optical memory (e.g., CD, DVD, HD-DVD, Blu-Ray Disc, etc.), semiconductor memory (e.g., RAM, EPROM, EEPROM, etc.), and/or magnetic memory, among others. Storage subsystem 904 can include volatile, nonvolatile, dynamic, static, read/write, read-only, random-access, sequential-access, location-addressable, file-addressable, and/or content-addressable devices.

Aspects of logic subsystem 902 and storage subsystem 904 can be integrated together into one or more hardware-logic components. Such hardware-logic components can include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem can cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine can be instantiated by a single computing device, or a machine can include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality can optionally be saved as one or more unexecuted modules on one or more suitable storage devices.

When included, display subsystem 906 can be used to present a visual representation of data held by storage subsystem 904. This visual representation can take the form of a graphical user interface (GUI). As the herein described methods and processes change the data held by the storage subsystem, and thus transform the state of the storage subsystem, the state of display subsystem 906 can likewise be transformed to visually represent changes in the underlying data. Display subsystem 906 can include one or more display devices utilizing virtually any type of technology. Such display devices can be combined with the logic subsystem and the storage subsystem in a shared enclosure, or such display devices can be peripheral display devices.

When included, input subsystem 908 can comprise or interface with one or more input devices such as a keyboard and touch screen. In some examples, the input subsystem can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; and an infrared, color, stereoscopic, and/or depth camera for machine vision and/or gesture recognition.

When included, communication subsystem 910 can be configured to communicatively couple computing system 900 with one or more other computing devices. Communication subsystem 910 can include wired and/or wireless communication devices compatible with one or more different communication protocols. As non-limiting examples, the communication subsystem can be configured for communication via a wireless telephone network, or a wired or wireless local- or wide-area network. In some examples, the communication subsystem may allow computing system 900 to send and/or receive messages to and/or from other devices via a network such as the Internet.

Further, the disclosure comprises configurations according to the following clauses.

Clause 1. A method of evaluating a training performance of a training subject against a competency framework, the training performance being performed in a training environment that simulates a physical environment, the method comprising: receiving a simulation state update from a computing system of the training environment; querying a behavioral elicitation event (BEE) database to determine, from a plurality of BEEs stored in the BEE database, a set of active BEEs based upon the simulation state update, each BEE of the plurality of BEEs comprising one or more elicited actions and one or more observable behaviors; receiving a plurality of simulation action notifications from the computing system of the training environment; for each simulation action notification, determining whether an action represented by the simulation action notification matches an elicited action for at least one active BEE in the set of active BEEs and storing information regarding the elicited action as a response to the at least one active BEE in the set of active BEEs; determining a set of completed BEEs, the set of completed BEEs comprising each active BEE that has all corresponding elicited actions met; and for each completed BEE of the set of completed BEEs, storing information regarding the training performance, the information comprising the one or more observable behaviors of the completed BEE.

Clause 2. The method of clause 1, wherein each BEE of the plurality of BEEs further comprises one or more triggers, and wherein querying the BEE database to determine the set of active BEEs comprises, querying the BEE database for one or more triggers that have a condition matching the simulation state update, storing the one or more triggers as a set of active triggers, and querying the BEE database to determine whether any BEEs are active BEEs based on the set of active triggers.

Clause 3. The method of clause 2, wherein querying the BEE database to determine the set of active BEEs further comprises determining one or more inactive triggers in the set of active triggers by comparing a corresponding condition for each active trigger in the set of active triggers to the simulation state update, and removing the one or more inactive triggers from the set of active triggers.

Clause 4. The method of any preceding clause, further comprising, comparing a prior set of active BEEs to the set of active BEEs, and for each active BEE in the prior set of active BEEs and not in the set of active BEEs, storing the active BEE as an incomplete BEE and also storing information regarding the training performance, the information comprising one or more missed elicited actions in response to the incomplete BEE.

Clause 5. The method of any preceding clause, further comprising, when the action represented by the simulation action notification matches the elicited action for the at least one active BEE in the set of active BEEs, determining whether the elicited action has a timing condition, and storing information regarding a timing of the simulation action notification.

Clause 6. The method of clause 5, further comprising comparing the timing of the simulation action notification with a timing of a corresponding trigger of the at least one active BEE, and storing information regarding the comparison of the timings.

Clause 7. The method of any preceding clause, wherein the simulation state update comprises a change in one or more of a simulated flight phase, simulated weather, or a state of a simulated aircraft.

Clause 8. The method of any preceding clause, wherein the plurality of simulation action notifications indicates a corresponding plurality of user inputs received by the training environment.

Clause 9. A computing system comprising: a logic system operably coupled to a training environment that simulates a physical environment; and a computer-readable storage system comprising, a behavioral elicitation event (BEE) database comprising a plurality of BEEs, each BEE of the plurality of BEEs comprising one or more elicited actions and one or more observable behaviors, and instructions executable by the logic system to receive a simulation state update from a computing system of the training environment, query the BEE database to determine, from the plurality of BEEs, a set of active BEEs based upon the simulation state update, receive a plurality of simulation action notifications, for each simulation action notification, determine whether an action represented by the simulation action notification matches an elicited action for at least one active BEE in the set of active BEEs, and store information regarding the elicited action as a response to the at least one active BEE in the set of active BEEs, determine a set of completed BEEs, the set of completed BEEs comprising each active BEE that has all corresponding elicited actions met, and for each completed BEE of the set of completed BEEs, store information regarding the completed BEE.

Clause 10. The computing system of clause 9, wherein each BEE of the plurality of BEEs further comprises one or more triggers, and wherein the instructions executable to query the BEE database to determine the set of active BEEs comprise instructions executable to query the BEE database for one or more triggers that have a condition matching the simulation state update, store the one or more triggers as a set of active triggers, and query the BEE database to determine whether any BEEs are active BEEs based on the set of active triggers.

Clause 11. The computing system of clause 10, wherein the instructions executable to query the BEE database to determine the set of active BEEs further comprise instructions executable to determine one or more inactive triggers in the set of active triggers by comparing a corresponding condition for each active trigger in the set of active triggers to the simulation state update, and to remove the one or more inactive triggers from the set of active triggers.

Clause 12. The computing system of any of clauses 9 to 11, wherein the instructions are further executable to compare a prior set of active BEEs to the set of active BEEs, and for each active BEE in the prior set of active BEEs and not in the set of active BEEs, store the active BEE as an incomplete BEE and also store information regarding the incomplete BEE.

Clause 13. The computing system of any of clauses 9 to 12, wherein the instructions are further executable to, when the action represented by the simulation action notification matches the elicited action for the at least one active BEE in the set of active BEEs, determine whether the elicited action has a timing condition, and store information regarding a timing of the simulation action notification.

Clause 14. The computing system of any of clauses 9 to 13, wherein the simulation state update comprises a change in one or more of a simulated flight phase, simulated weather, or a state of a simulated aircraft.

Clause 15. The computing system of any of clauses 9 to 14, wherein the plurality of simulation action notifications indicates a corresponding plurality of user inputs received by the training environment.

Clause 16. A method of evaluating a training performance of a training subject against a competency framework, the training performance being performed in a training environment that simulates a physical environment, the method comprising: receiving a first simulation state update from a computing system of the training environment; querying a behavioral elicitation event (BEE) database to determine, from a plurality of BEEs stored in the BEE database, a first set of active BEEs based upon the first simulation state update, each BEE of the plurality of BEEs comprising one or more elicited actions and one or more observable behaviors; receiving a plurality of simulation action notifications from the computing system of the training environment; for each simulation action notification, determining whether an action represented by the simulation action notification matches an elicited action for at least one active BEE in the first set of active BEEs and storing, information regarding the elicited action and corresponding observable behaviors as a response to the at least one active BEE in the first set of active BEEs; receiving a second simulation state update from the computing system of the training environment; querying the BEE database to determine a second set of active BEEs based upon the second simulation state update; comparing the first set of active BEEs to the second set of active BEEs; and for each active BEE in the first set of active BEEs and not in the second set of active BEEs, store the active BEE as an incomplete BEE and also store information regarding the incomplete BEE.

Clause 17. The method of clause 16, wherein each BEE of the plurality of BEEs further comprises one or more triggers, and wherein querying the BEE database to determine the first or the second set of active BEEs comprises, querying the BEE database for one or more triggers that have a condition matching the simulation state update, storing the one or more triggers as a set of active triggers, and querying the BEE database to determine whether any BEEs are active BEEs based on the set of active triggers.

Clause 18. The method of clause 17, wherein querying the BEE database to determine the first or the second set of active BEEs further comprises determining one or more inactive triggers in the set of active triggers by comparing a corresponding condition for each active trigger in the set of active triggers to the simulation state update, and removing the one or more inactive triggers from the set of active triggers.

Clause 19. The method of any of clauses 16 to 18, further comprising, when the action represented by the simulation action notification matches the elicited action for the at least one active BEE in the set of active BEEs, determining whether the elicited action has a timing condition, and storing information regarding a timing of the simulation action notification.

Clause 20. The method of any of clauses 16 to 19, further comprising, determining a set of completed BEEs, the set of completed BEEs comprising each active BEE that has all corresponding elicited actions met; and for each completed BEE of the set of completed BEEs, storing information regarding the training performance, the information comprising the one or more observable behaviors of the completed BEE.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method (800) of evaluating a training performance of a training subject (104) against a competency framework, the training performance being performed in a training environment that simulates a physical environment, the method (800) comprising:
receiving (802) a simulation state update (502, 504) from a computing system (100, 900, 402) of the training environment;
querying (804) a behavioral elicitation event, BEE, database (114) to determine, from a plurality of BEEs (200, 212) stored in the BEE database (114), a set of active BEEs based upon the simulation state update (502, 504), each BEE (200, 212) of the plurality of BEEs (200, 212) comprising one or more elicited actions (206, 308, 310) and one or more observable behaviors (210, 312, 314);
receiving (812) a plurality of simulation action notifications (506, 508) from the computing system (100, 900, 402) of the training environment;
for each simulation action notification (506, 508), determining (814) whether an action represented by the simulation action notification (506, 508) matches an elicited action (206, 308, 310) for at least one active BEE in the set of active BEEs and storing (820) information regarding the elicited action (206, 308, 310) as a response to the at least one active BEE in the set of active BEEs;
determining (826) a set of completed BEEs, the set of completed BEEs comprising each active BEE that has all corresponding elicited actions (206, 308, 310) met; and
for each completed BEE of the set of completed BEEs, storing (828) information regarding the training performance, the information comprising the one or more observable behaviors (210, 312, 314) of the completed BEE.

2. The method (800) of claim 1, wherein each BEE (200, 212) of the plurality of BEEs (200, 212) further comprises one or more triggers (202, 304, 306), and wherein querying the BEE database (114) to determine the set of active BEEs comprises,
querying (806) the BEE database (114) for one or more triggers (202, 304, 306) that have a condition matching the simulation state update (502, 504),
storing (808) the one or more triggers (202, 304, 306) as a set of active triggers (202, 304, 306), and
querying (811) the BEE database (114) to determine whether any BEEs (200, 212) are active BEEs based on the set of active triggers (202, 304, 306).

3. The method (800) of claim 2, wherein querying the BEE database (114) to determine the set of active BEEs further comprises determining (810) one or more inactive triggers (202, 304, 306) in the set of active triggers (202, 304, 306) by comparing a corresponding condition for each active trigger (202, 304, 306) in the set of active triggers (202, 304, 306) to the simulation state update (502, 504), and removing (810) the one or more inactive triggers (202, 304, 306) from the set of active triggers (202, 304, 306).

4. The method (800) of any preceding claim, further comprising,
comparing (822) a prior set of active BEEs to the set of active BEEs, and
for each active BEE in the prior set of active BEEs and not in the set of active BEEs, storing (822) the active BEE as an incomplete BEE and also storing (822) information regarding the training performance, the information comprising one or more missed elicited actions (206, 308, 310) in response to the incomplete BEE.

5. The method (800) of any preceding claim, further comprising, when the action represented by the simulation action notification (506, 508) matches the elicited action (206, 308, 310) for the at least one active BEE in the set of active BEEs, determining (816) whether the elicited action (206, 308, 310) has a timing condition (204, 208), and storing (816) information regarding a timing of the simulation action notification (506, 508).

6. The method (800) of claim 5, further comprising comparing (818) the timing of the simulation action notification (506, 508) with a timing of a corresponding trigger (202, 304, 306) of the at least one active BEE, and storing (818) information regarding the comparison of the timings.

7. The method (800) of any preceding claim, wherein the simulation state update (502, 504) comprises a change in one or more of a simulated flight phase, simulated weather, or a state of a simulated aircraft.

8. The method (800) of any preceding claim, wherein the plurality of simulation action notifications (506, 508) indicates a corresponding plurality of user inputs received by the training environment.

9. A computing system (100, 900, 402) comprising:
a logic system operably coupled to a training environment that simulates a physical environment; and
a computer-readable storage system (112) comprising,
a behavioral elicitation event, BEE, database (114) comprising a plurality of BEEs (200, 212), each BEE (200, 212) of the plurality of BEEs (200, 212) comprising one or more elicited actions (206, 308, 310) and one or more observable behaviors (210, 312, 314), and
instructions executable by the logic system to
receive (802) a simulation state update (502, 504) from a computing system (100, 900, 402) of the training environment,
query (804) the BEE database (114) to determine, from the plurality of BEEs (200, 212), a set of active BEEs based upon the simulation state update (502, 504),
receive (812) a plurality of simulation action notifications (506, 508),
for each simulation action notification (506, 508), determine (814) whether an action represented by the simulation action notification (506, 508) matches an elicited action (206, 308, 310) for at least one active BEE in the set of active BEEs, and store information regarding the elicited action (206, 308, 310) as a response to the at least one active BEE in the set of active BEEs,
determine (826) a set of completed BEEs, the set of completed BEEs comprising each active BEE that has all corresponding elicited actions (206, 308, 310) met, and
for each completed BEE of the set of completed BEEs, store (828) information regarding the completed BEE.

10. The computing system (100, 900, 402) of claim 9, wherein each BEE (200, 212) of the plurality of BEEs (200, 212) further comprises one or more triggers (202, 304, 306), and wherein the instructions executable to query the BEE database (114) to determine the set of active BEEs comprise instructions executable to
query (806) the BEE database (114) for one or more triggers (202, 304, 306) that have a condition matching the simulation state update (502, 504),
store (808) the one or more triggers (202, 304, 306) as a set of active triggers (202, 304, 306), and
query (811) the BEE database (114) to determine whether any BEEs (200, 212) are active BEEs based on the set of active triggers (202, 304, 306).

11. The computing system (100, 900, 402) of claim 10, wherein the instructions executable to query the BEE database (114) to determine the set of active BEEs further comprise instructions executable to determine (810) one or more inactive triggers (202, 304, 306) in the set of active triggers (202, 304, 306) by comparing a corresponding condition for each active trigger (202, 304, 306) in the set of active triggers (202, 304, 306) to the simulation state update (502, 504), and to remove (810) the one or more inactive triggers (202, 304, 306) from the set of active triggers (202, 304, 306).

12. The computing system (100, 900, 402) of any of claims 9 to 11, wherein the instructions are further executable to
compare (822) a prior set of active BEEs to the set of active BEEs, and
for each active BEE in the prior set of active BEEs and not in the set of active BEEs, store (822) the active BEE as an incomplete BEE and also store information regarding the incomplete BEE.

13. The computing system (100, 900, 402) of any of claims 9 to 12, wherein the instructions are further executable to, when the action represented by the simulation action notification (506, 508) matches the elicited action (206, 308, 310) for the at least one active BEE in the set of active BEEs, determine (816) whether the elicited action (206, 308, 310) has a timing condition (204, 208), and store (816) information regarding a timing of the simulation action notification (506, 508).

14. The computing system (100, 900, 402) of any of claims 9 to 13, wherein the simulation state update (502, 504) comprises a change in one or more of a simulated flight phase, simulated weather, or a state of a simulated aircraft, and/or wherein the plurality of simulation action notifications (506, 508) indicates a corresponding plurality of user inputs received by the training environment.

15. A method (800) of evaluating a training performance of a training subject (104) against a competency framework, the training performance being performed in a training environment that simulates a physical environment, the method (800) comprising:
receiving (802) a first simulation state update (502, 504) from a computing system (100, 900, 402) of the training environment;
querying (804) a behavioral elicitation event, BEE, database (114) to determine, from a plurality of BEEs (200, 212) stored in the BEE database (114), a first set of active BEEs based upon the first simulation state update (502, 504), each BEE (200, 212) of the plurality of BEEs (200, 212) comprising one or more elicited actions (206, 308, 310) and one or more observable behaviors (210, 312, 314);
receiving (812) a plurality of simulation action notifications (506, 508) from the computing system (100, 900, 402) of the training environment;
for each simulation action notification (506, 508), determining (814) whether an action represented by the simulation action notification (506, 508) matches an elicited action (206, 308, 310) for at least one active BEE in the first set of active BEEs and storing, information regarding the elicited action (206, 308, 310) and corresponding observable behaviors (210, 312, 314) as a response to the at least one active BEE in the first set of active BEEs;
receiving a second simulation state update (502, 504) from the computing system (100, 900, 402) of the training environment;
querying the BEE database (114) to determine a second set of active BEEs based upon the second simulation state update (502, 504);
comparing (822) the first set of active BEEs to the second set of active BEEs; and
for each active BEE in the first set of active BEEs and not in the second set of active BEEs, store (822) the active BEE as an incomplete BEE and also store information regarding the incomplete BEE.
